# EUROPEAN PATENT APPLICATION

(11) **EP 4 742 209 A1**
(43) Date of publication of application: **13.05.2026**
(21) Application number: 24896287.0
(22) Date of filing: 14.11.2024
(51) Int. Cl.: G08C 23/04, H04M 1/72415

(54) **INFRARED REMOTE CONTROL METHOD, ELECTRONIC DEVICE, COMPUTER STORAGE MEDIUM AND PROGRAM PRODUCT**

(30) Priority: 01.12.2023 CN 202311635842
(71) Applicant: Honor Device Co., Ltd., Shenzhen, Guangdong 518040 (CN)
(72) Inventor: MENG, Yuhuang, Shenzhen, Guangdong 518040 (CN); YE, Hengzhi, Shenzhen, Guangdong 518040 (CN); WU, Runhao, Shenzhen, Guangdong 518040 (CN); FENG, Xiaogang, Shenzhen, Guangdong 518040 (CN)
(74) Representative: Gill Jennings & Every LLP
(86) International application number: PCT/CN2024/132100
(87) International publication number: WO 2025/113196

(57) **Abstract**

This application provides an infrared remote control method, an electronic device, a computer storage medium, and a program product. The electronic device may include a TOF module. The TOF module includes a TOF sensor, a driver chip, and a light source configured to transmit an infrared optical signal. The infrared remote control method includes: at a first moment, controlling the light source to transmit a first infrared optical signal to a user, controlling the TOF sensor to collect image data, and performing facial recognition based on the image data; and at a second moment, in response to a tap instruction or a voice instruction of the user, controlling the light source to transmit a second infrared optical signal to a controlled electronic device, or sending a control signal to the driver chip, to enable the driver chip to control the light source to transmit the second infrared optical signal to the controlled electronic device. According to the infrared remote control method in this application, operational convenience of the electronic device in controlling the controlled electronic device is improved, and 360-degree omnidirectional remote control can be performed on the controlled electronic device.

## Description

### CROSS-REFERENCE TO RELATED APPLICATIONS

This application claims priority to Chinese Patent Application No. 202311635842.X, filed with the China National Intellectual Property Administration on December 1, 2023 and entitled "INFRARED REMOTE CONTROL METHOD AND TERMINAL DEVICE", which is incorporated herein by reference in its entirety.

### TECHNICAL FIELD

This application pertains to the terminal field, and in particular, to an infrared remote control method, an electronic device, a computer storage medium, and a computer program product.

### BACKGROUND

With continuous development of the internet of things, terminal devices such as smartphones become a most important mobile control manner in smart home control systems. For example, a user can implement remote control functions of a plurality of home appliances, such as a light, an air conditioner, and a television, through remote control applications on a mobile phone.

To implement an infrared remote control function of a terminal device in a conventional technology, an additional circuit module needs to be added to the terminal device, increasing costs and design complexity of the terminal device. In addition, an existing terminal device has a small remote control emission angle. During use of remote control, an infrared emitting end of the terminal device needs to align with a controlled device; otherwise, signals transmitted by the terminal device cannot be transmitted to the controlled device. Consequently, the existing terminal device is still inconvenient in signal transmission control, affecting user experience.

### SUMMARY

Embodiments of this application disclose an infrared remote control method, an electronic device, a computer storage medium, and a program product. According to this application, an infrared remote control function is implemented on an electronic device based on a TOF module, so that design complexity of the electronic device can be reduced. According to this application, 360-degree omnidirectional remote control can be performed on a controlled electronic device.

The TOF module is widely used in various electronic devices, to detect a distance of a target object. In some scenarios, a terminal device may use the TOF module to perform 3D imaging and face unlock. The TOF module includes an emitting end (for example, an infrared light source), a receiving end, and a chip. A light source of the TOF module may be configured to emit infrared light, and may include an infrared light-emitting diode. The infrared light-emitting diode is configured to emit infrared light. The receiving end may receive infrared light that is emitted by the infrared light-emitting diode and that is reflected back after being projected onto an object. The chip may control emission of the infrared light, and calculate a time difference between emission and reception of the light, to obtain a distance of the to-be-shot object through calculation. Therefore, the infrared light-emitting diode in the TOF module can function as an infrared light emitter in this application, to implement the infrared remote control function of the electronic device.

Based on this, according to a first aspect, this application provides an infrared remote control method, applied to an electronic device. The electronic device may include a TOF module and a processing chip. The TOF module includes a TOF sensor, a driver chip, and a light source configured to transmit an infrared optical signal, where the driver chip is electrically connected to two ends of the light source. The infrared remote control method includes: at a first moment, controlling the light source to transmit a first infrared optical signal to a user, controlling the TOF sensor to collect image data, and performing facial recognition based on the image data; and at a second moment, in response to a tap instruction or a voice instruction of the user, controlling the light source to transmit a second infrared optical signal to a controlled electronic device, or sending a control signal to the driver chip, to enable the driver chip to control the light source to transmit the second infrared optical signal to the controlled electronic device. The first moment is before the second moment.

It may be understood that before the user performs infrared remote control on the controlled electronic device by using the electronic device, that is, at the first moment, the light source may be controlled to emit infrared light (namely, the first infrared optical signal) to the user to perform facial recognition. If the user succeeds in facial recognition, that is, unlocks an infrared remote control function of the electronic device, at the second moment, in response to the tap instruction or the voice instruction of the user, the light source may be controlled to emit infrared light (namely, the second infrared optical signal) to the controlled electronic device at a predetermined frequency. This can implement the infrared remote control function on the controlled electronic device. The "tap instruction" may be a tap instruction generated when the user taps a remote control application on the electronic device, namely, a tap instruction that controls the light source to transmit an infrared optical signal and that is generated when the user taps the remote control application on the electronic device. The "voice instruction" may be a voice signal issued by the user to the electronic device. For example, the user issues a voice instruction to an electronic device (for example, an air conditioner) (for example, the voice instruction may be "Hello YOYO, set the air conditioner temperature to 26°C"). After receiving the voice instruction, the electronic device adjusts the temperature of the air conditioner.

According to the infrared remote control method in this application, the TOF module may be reused to transmit an infrared remote control signal. This improves operational convenience of the electronic device in controlling the controlled electronic device, reduces design complexity of a terminal device, and improves user experience. According to the infrared remote control method in this application, the TOF module is configured to implement infrared remote control. The TOF module is configured to: perform facial recognition or detect a distance of a target object, that is, the TOF module has a wide-angle and high-power infrared light emission light field. Therefore, this can resolve a problem that an infrared emitter of a conventional electronic device needs to align with a controlled electronic device to implement infrared remote control due to low power and a small remote control emission angle of the conventional electronic device.

In an optional solution, the electronic device further includes a processing chip. The processing chip includes a GPIO port, the driver chip includes a signal processing circuit, and the GPIO port of the processing chip is electrically connected to the signal processing circuit. The processing chip is configured to: at the second moment, in response to the tap instruction or the voice instruction of the user, send a GPIO signal to the signal processing circuit through the GPIO port. The signal processing circuit is configured to convert the GPIO signal into a drive signal, where the drive signal is used to drive the light source to transmit the second infrared optical signal to the controlled electronic device. Based on this design, no additional circuit module needs to be added to the electronic device in this application, and the infrared remote control function is implemented on the electronic device by using the TOF module. The TOF sensor does not need to provide an LVDS signal, and the processing chip of the electronic device sends the GPIO signal to the driver chip, so that the light source can also be driven to transmit an infrared remote control signal to the controlled electronic device at a predetermined frequency. This implements the infrared remote control function.

In an optional solution, the TOF sensor is configured to: at the first moment, send a control signal to the driver chip; and the driver chip is configured to convert the control signal into a second drive signal, where the second drive signal is used to drive the light source to transmit the first infrared optical signal to the user. Before the user performs infrared remote control on the controlled electronic device by using the electronic device, that is, at the first moment, the control signal is sent to the driver chip through the TOF sensor, so that the driver chip sends the second drive signal to the light source, to drive the light source to emit infrared light (namely, the first infrared optical signal) to the user to perform facial recognition. In an optional solution, the electronic device further includes a processing chip and a first component, the first component is connected between a second end of the light source and a grounding end, the processing chip is connected to a first end of the light source, and the processing chip is further connected to the first component; and the first component is configured to connect or disconnect an electrical connection between the processing chip and the light source. Based on this design, the infrared remote control function may be implemented by using the processing chip and the first component.

In an optional solution, the processing chip is configured to: at the second moment, in response to the user succeeding in completing facial recognition and in response to the tap instruction or the voice instruction of the user, control a switching transistor to be in an on state in a first time period, and control the switching transistor to be in an off state in a second time period, where the first time period and the second time period are one switching cycle. Based on this design, the processing chip and the switching transistor in this application can control the light source to transmit an infrared optical signal at a predetermined frequency, thereby implementing a plurality of remote control functions of the controlled electronic device.

In an optional solution, the processing chip is configured to supply power to the light source when the switching transistor is in an on state, to enable the light source to transmit an infrared optical signal to the controlled electronic device. Based on this design, the processing chip and the switching transistor in this application can control the light source to transmit an infrared optical signal at a predetermined frequency, thereby implementing a plurality of remote control functions of the controlled electronic device.

In an optional solution, the terminal device further includes a processing chip and an interface converter, the TOF sensor is connected to a first input end of the interface converter through a first bus and a second bus, the processing chip is connected to a second input end of the interface converter through a third bus and a fourth bus, and an output end of the interface converter is connected to the driver chip through a fifth bus and a sixth bus. Based on this design, the terminal device in this application can switch between a TOF function and the remote control function by controlling the interface converter. Optionally, the first bus, the third bus, and the fifth bus are all serial peripheral interface buses, and the second bus, the fourth bus, and the sixth bus are all low-voltage differential signaling buses.

In an optional solution, the interface converter is configured to: connect the TOF sensor and the driver chip, or connect the processing chip and the driver chip.

In an optional solution, the processing chip is further configured to: in response to the tap instruction or the voice instruction of the user, output a first switching signal to the interface converter, to enable the interface converter to connect the processing chip and the driver chip. The processing chip is further configured to: in response to a camera instruction of the user, output a second switching signal to the interface converter, to enable the interface converter to connect the TOF sensor and the driver chip. Based on this design, according to this application, switching between a TOF function and the remote control function can be implemented by controlling the interface converter.

According to a second aspect, this application further provides an electronic device. The electronic device includes a TOF module and a processing chip, and the processing chip is configured to perform the infrared remote control method provided in the first aspect.

According to a third aspect, this application further provides a computer-readable storage medium. The computer-readable storage medium stores a computer program. When the computer program runs on an electronic device, the electronic device is enabled to implement the infrared remote control method provided in the first aspect.

According to a fourth aspect, this application further provides a computer program product. When the computer program product runs on an electronic device, the electronic device is enabled to implement the infrared remote control method provided in the first aspect.

Technical effects achieved in the second aspect, the third aspect, and the fourth aspect are similar to technical effects achieved by corresponding technical means in the first aspect, and are not described herein again.

### BRIEF DESCRIPTION OF DRAWINGS

To describe the technical solutions of embodiments of this application more clearly, the following briefly describes the accompanying drawings for embodiments. It should be understood that the following accompanying drawings show merely some embodiments of this application, and therefore should not be considered as a limitation on the scope. A person of ordinary skill in the art may still derive other drawings from these accompanying drawings without creative efforts.
FIG. 1 is a diagram of an application scenario of an electronic device;
FIG. 2 is a diagram of an application scenario of an electronic device according to an embodiment of this application;
FIG. 3 is a diagram of an application scenario of an electronic device according to an embodiment of this application;
FIG. 4 is a diagram of an electronic device according to an embodiment of this application;
FIG. 5 is another diagram of an electronic device according to an embodiment of this application;
FIG. 6 is another diagram of an electronic device according to an embodiment of this application;
FIG. 7 is another diagram of an electronic device according to an embodiment of this application;
FIG. 8 is a diagram of radiation intensity of an infrared light field emitted by a TOF module according to an embodiment of this application;
FIG. 9 is a diagram of infrared light emitted by a TOF module according to an embodiment of this application;
FIG. 10 is a diagram of infrared light that is emitted by a TOF module and that is reflected by a surrounding object according to an embodiment of this application;
FIG. 11 is a diagram of radiation intensity of an infrared light field present after infrared light emitted by a TOF module is reflected by a surrounding object according to an embodiment of this application;
FIG. 12 is a diagram of a relative position between infrared light emitted by a TOF module and a user present when the user holds an electronic device;
FIG. 13 is a diagram of infrared light that is emitted by a TOF module and that is reflected by a human body and a surrounding object;
FIG. 14 is a diagram of radiation intensity of a light field present after infrared light emitted by a TOF module is reflected by a human body and a surrounding object;
FIG. 15 is a signal diagram of an infrared optical signal transmitted by a TOF module according to an embodiment of this application;
FIG. 16 is another signal diagram of an infrared optical signal transmitted by a TOF module according to an embodiment of this application; and
FIG. 17 is another signal diagram of an infrared optical signal transmitted by a TOF module according to an embodiment of this application.

### DESCRIPTION OF EMBODIMENTS

In embodiments of this application, the terms such as "first" and "second" are merely used for distinguishing between different objects, and cannot be understood as an indication or implication of relative importance, or cannot be understood as an indication or implication of an order. For example, a first application, a second application, and the like are used to distinguish between different applications, but are not used to describe a specific order of applications. A feature limited by "first", "second", or the like may explicitly or implicitly include one or more features.

"Embodiments" mentioned in this application mean that specific features, structures, or characteristics described in combination with embodiments may be included in at least one embodiment of this application. The phrase shown in various locations in this specification may not necessarily mean a same embodiment, and is not an independent or optional embodiment exclusive from another embodiment. It is explicitly and implicitly understood by a person skilled in the art that embodiments described in this application may be combined with another embodiment.

With continuous development of the internet of things, electronic devices such as smartphones become a most important mobile control manner in smart home control systems. For example, a user can implement remote control functions of a plurality of home appliances, such as a light, an air conditioner, and a television, through remote control applications on a mobile phone.

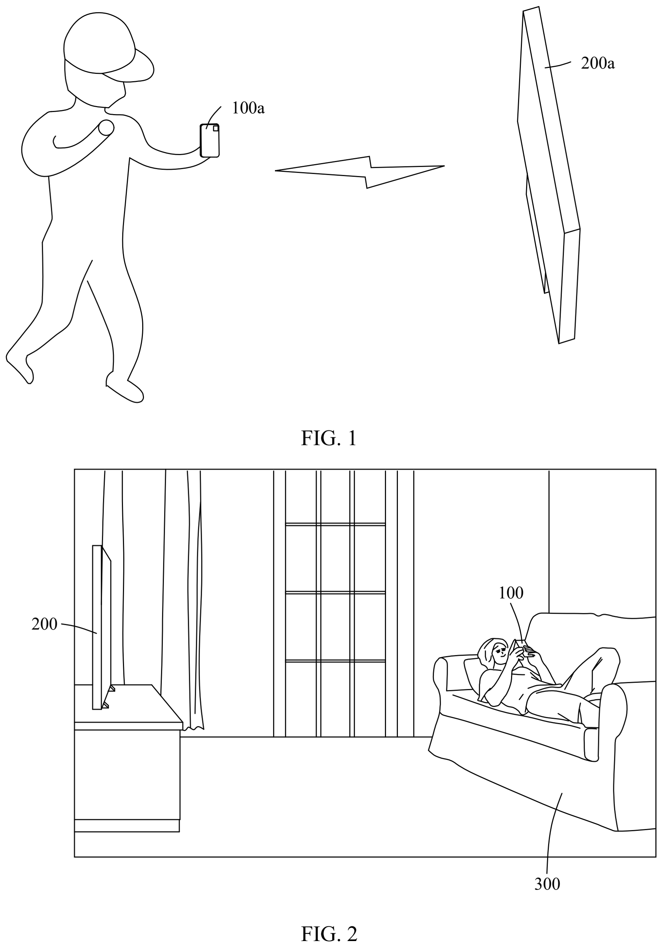

FIG. 1 is a diagram of an application scenario of an electronic device 100a. A user performs remote control on a controlled electronic device 200a by using the electronic device 100a. The electronic device 100a is a mobile phone, and the controlled electronic device 200a is a television. Because the mobile phone is configured with an independent infrared emitter on a top side or a back side of the mobile phone, the user can use the mobile phone to perform remote control on functions such as volume, channel playing, power-on, or power-off of the television. However, because the infrared emitter is only used to implement a remote control function of the mobile phone, the infrared emitter has low power and a small remote control emission angle. Therefore, when the user performs remote control by using the electronic device 100a, the infrared emitter of the electronic device 100a needs to align with the controlled electronic device 200a. If the infrared emitter of the electronic device 100a does not align with the controlled electronic device 200a, an infrared signal transmitted by the electronic device 100a cannot be transmitted to the controlled electronic device 200a, and the remote control function cannot be implemented. Consequently, the electronic device 100a is still inconvenient in signal transmission control, greatly reducing user experience.

To resolve the foregoing problem, this application provides an infrared remote control method, an electronic device, a computer storage medium, and a program product. The technical solutions of this application can implement an infrared remote control function on the electronic device based on a general time of flight (Time of Flight, TOF) module, reduce design complexity of the electronic device, implement 360-degree omnidirectional remote control, and improve user experience.

TOF stands for time of flight. Time of flight 3D imaging means continuously sending light pulses to a target, then using a sensor to receive light reflected back from the object, and detecting time of flight (round-trip time) of the light pulses to obtain a distance of the target object. The sensor calculates a time difference or a phase difference between emission and reflection of light, to convert a distance of a to-be-shot object to generate depth information. In addition, with reference to conventional camera shooting, a three-dimensional contour of the object can be presented through a topographic map with different colors representing different distances.

The TOF module is widely used in various electronic devices, to detect a distance of a target object. In some scenarios, the electronic device may use the TOF module to perform 3D imaging and face unlock. The following uses an example in which the electronic device is a mobile phone for description. The TOF module may be disposed on a screen side of the mobile phone and/or a battery cover side of the mobile phone. The TOF module may include an emitting end (for example, an infrared light source), a receiving end, and a chip. The emitting end of the TOF module may be configured to emit infrared light, and may include an infrared light-emitting diode. The receiving end may receive infrared light that is emitted by infrared light and that is reflected back after being projected onto an object. A chip may control emission of the infrared light, and calculate a time difference between emission and reception of the light, to obtain a distance of the to-be-shot object through calculation. Therefore, the infrared light-emitting diode in the TOF module can function as an infrared light emitter in embodiments of this application, to implement the infrared remote control function of the electronic device.

Usually, when the user needs to perform infrared remote control on the controlled electronic device, the user may perform a related operation on the electronic device, so that the electronic device sends a remote control instruction to the controlled electronic device. This can implement a remote control function on the controlled electronic device. For example, the user may perform an operation on a remote control application (Application, APP) on the electronic device, to implement the remote control function on the controlled electronic device.

When the user performs a first remote control operation (for example, remote control on power-on of a television) on the remote control application on the electronic device, the electronic device sends a power-on instruction to the controlled electronic device through the TOF module, so that the controlled electronic device powers on after receiving the power-on instruction. When the user performs a second remote control operation (for example, remote control on power-off of a television) on the remote control application on the electronic device, the electronic device sends a power-off instruction to the controlled electronic device through the TOF module, so that the controlled electronic device powers off after receiving the power-off instruction. When the user performs a third remote control operation (for example, remote control on volume adjustment of a television) on the remote control application on the electronic device, the electronic device sends a volume adjustment instruction to the controlled electronic device through the TOF module, so that the controlled electronic device performs volume adjustment after receiving the power-off instruction. The user can perform remote control on a plurality of household appliances, such as an air conditioner, a television, a lamp, or an electric fan, by using the remote control application on the electronic device. This facilitates use, and improves user experience.

FIG. 2 is a diagram of an application scenario of an electronic device 100 according to an embodiment of this application. It may be understood that the technical solutions of embodiments of this application may be applied to any infrared remote control scenario, for example, various types of electronic devices including TOF modules, such as a mobile phone, a tablet computer, a personal computer, or a television. The controlled electronic device may be various household appliances, such as a lamp, an air conditioner, a television, or an electric fan.

As shown in FIG. 2, in a scenario, for example, the electronic device 100 is a mobile phone, and the controlled electronic device 200 is a television. The user holds the mobile phone and lies on a sofa, and the mobile phone is not aligned with the television. In other words, the user may lie on the sofa and play with the mobile phone when watching a program on the television.

At a specific moment, if the user wants to change a television channel or adjust a television playing volume, and the user does not change a current holding angle of the mobile phone (that is, the mobile phone does not need to align with an infrared receiver of the television), the user can still use a 360-degree omnidirectional infrared light field to perform remote control on the television. This greatly improves user experience. Therefore, in the scenario shown in FIG. 2, the electronic device 100 needs to perform 360-degree omnidirectional remote control on the controlled electronic device 200.

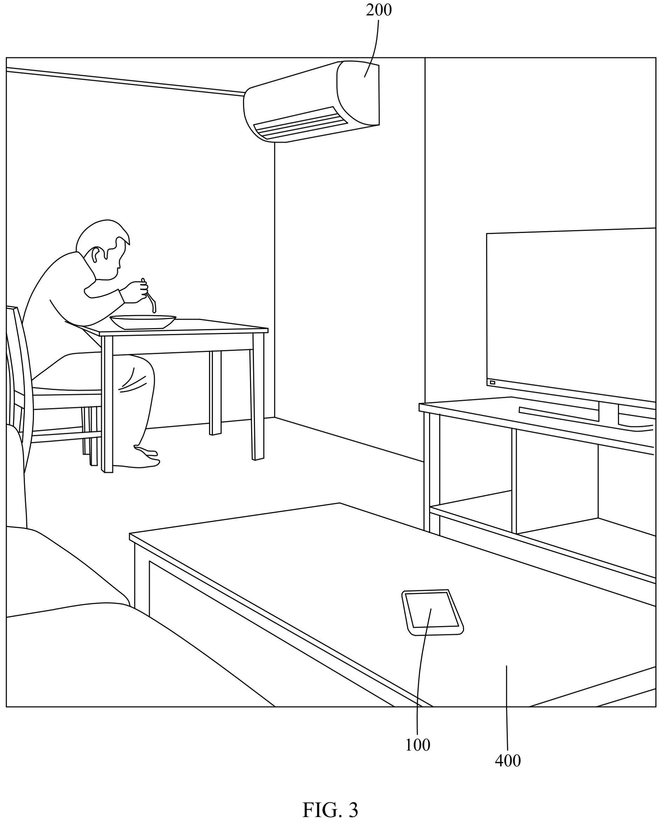

As shown in FIG. 3, in another scenario, for example, the electronic device 100 is the mobile phone, and the controlled electronic device 200 is an air conditioner. The user is dining at a dining table, and the mobile phone of the user is placed on a coffee table 400. Because there is a specific distance between the dining table and the coffee table 400, it is inconvenient for the user to manually operate the remote control application on the mobile phone to perform remote control on the air conditioner. When the user wants to adjust the air conditioner to a specific temperature (for example, 26°C), if the user issues a voice instruction (for example, the voice instruction may be "Hello YOYO, set the air conditioner temperature in the living room to 26°C") to the mobile phone, after receiving the voice instruction, the mobile phone adjusts the air conditioner temperature. In other words, if the user can perform remote control on the air conditioner temperature by using only the voice instruction when dining, user experience can be greatly improved.

In another scenario, for example, the electronic device 100 is the mobile phone, and the controlled electronic device 200 is the television. The user is dining at the dining table, and the mobile phone of the user is placed on the coffee table 400. The television is playing a program. Because there is a specific distance between the dining table and the coffee table 400, it is inconvenient for the user to manually operate the mobile phone to control the television. When the user wants to change a television channel or adjust a television playing volume, if the user issues a voice instruction (for example, the voice instruction may be "Hello YOYO, adjust the television volume to 15) to the mobile phone, after receiving the voice instruction, the mobile phone adjusts the television volume. In other words, if the user can perform remote control on the television by using only the voice instruction when dining, user experience can be greatly improved.

Therefore, in these scenarios shown in FIG. 3, the electronic device 100 needs to perform infrared remote control on the controlled electronic device 200 with reference to a voice instruction of the user, making household appliance control more intelligent and convenient.

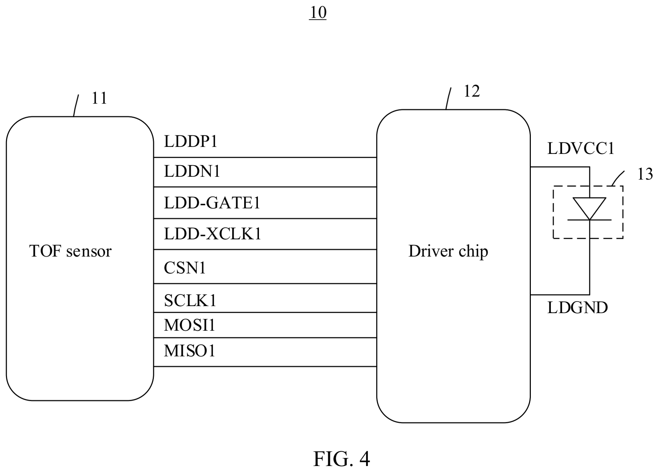

FIG. 4 is a schematic of a circuit of a TOF module 10 according to an embodiment of this application. It may be understood that, in embodiments, the TOF module 10 may be used in the electronic device 100, and the TOF module 10 may be configured to sense a distance of an object.

The TOF module 10 may include a TOF sensor (TOF sensor) 11, a driver chip 12, and a light source 13. The light source 13 may be used as an emitting end of the TOF module 10. The TOF module 10 further includes an optical lens (not shown in FIG. 4), and the optical lens and the TOF sensor 11 may be used as a receiving end of the TOF module 10. The TOF module 10 collects, by using the optical lens and the TOF sensor 11, a light source reflected back by an object.

The TOF sensor 11 is connected to the driver chip 12. In some specific implementations, the TOF sensor 11 may be connected to the driver chip 12 through a serial peripheral interface (Serial Peripheral Interface, SPI) bus and a low-voltage differential signaling (Low-Voltage Differential Signaling, LVDS) bus. In an example, as shown in FIG. 4, the TOF sensor 11 may include four SPI signal lines and four LVDS signal lines. The four SPI signal lines of the TOF sensor 11 may be a CSN1 signal line, an SCLK1 signal line, an MOSI1 signal line, and an MISO1 signal line. The four LVDS signal lines of the TOF sensor 11 may be an LDDP1 signal line, an LDDN1 signal line, an LDD-GATE1 signal line, and an LDD-XCLK1 signal line. The CSN1 signal line, the SCLK1 signal line, the MOSI1 signal line, and the MISO1 signal line of the TOF sensor 11 may all be electrically connected to the driver chip 12. The LDDP1 signal line, the LDDN1 signal line, the LDD-GATE1 signal line, and the LDD-XCLK1 signal line of the TOF sensor 11 may all be electrically connected to the driver chip 12.

It may be understood that the TOF sensor 11 may send an LVDS differential signal to the driver chip 12 through the LDDP1 signal line and the LDDN1 signal line, to control, by using the driver chip 12, the light source 13 to emit infrared light. The TOF sensor 11 may further send an enable signal to the driver chip 12 through the LDD-GATE1 signal line and the CSN1 signal line, so that the driver chip 12 can implement laser emission control and device selection. The TOF sensor 11 may further send a clock signal to the driver chip 12 through the LDD-XCLK1 signal line and the SCLK1 signal line, thereby implementing clock synchronization of laser emission and data sampling.

The TOF sensor 11 may be connected to a processing chip (not shown in FIG. 4). In some application scenarios, in response to an instruction of the processing chip, the TOF sensor 11 may send an LVDS signal to the driver chip 12. The driver chip 12 generates a drive signal after receiving the LVDS signal. The drive signal is used to drive the light source 13 to emit infrared light.

In this embodiment, a power pin LDVCC1 of the driver chip 12 is electrically connected to a first end of the light source 13, and a ground pin LDGND of the driver chip 12 is electrically connected to a second end of the light source 13.

It may be understood that the light source 13 may be a laser. For example, in an implementation, the light source 13 may be a vertical-cavity surface-emitting laser (vertical-cavity surface-emitting laser, VCSEL). In an example, the power pin LDVCC1 of the driver chip 12 is electrically connected to an anode of the VCSEL, and the ground pin LDGND of the driver chip 12 is electrically connected to a cathode of the VCSEL. Alternatively, in another implementation, the light source 13 may be an edge emitting laser (edge emitting laser, EEL).

In a use scenario, when the user uses a TOF function of the electronic device 100, the TOF sensor 11 sends an LVDS signal to the driver chip 12, so that the driver chip 12 drives the light source 13 to emit infrared light. In addition, the TOF sensor 11 can calculate a time difference or a phase difference between emission and reflection of the light, to convert a distance of a to-be-shot object to generate depth information. This implements functions of 3D imaging and face unlock of the electronic device 100.

In an application scenario, when the user uses a remote control function of the electronic device 100, the TOF sensor 11 sends an LVDS signal to the driver chip 12. After receiving the LVDS signal of the TOF sensor 11, the driver chip 12 drives the light source 13 to transmit an infrared remote control signal to the controlled electronic device 200 at a predetermined frequency. After receiving the infrared remote control signal transmitted by the light source 13, and decoding a working instruction included in the infrared light, the controlled electronic device 200 executes a remote control response operation corresponding to the working instruction. This implements the remote control function of the electronic device 100.

When the TOF function of the electronic device 100 is enabled, the remote control function of the electronic device 100 cannot be used. When the remote control function of the electronic device 100 is enabled, the TOF function of the electronic device 100 cannot be used.

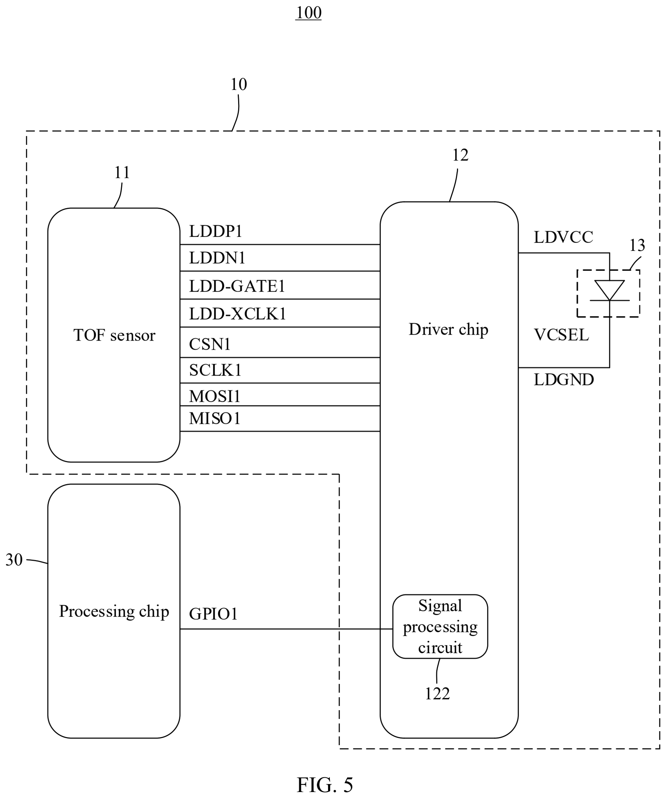

FIG. 5 is a diagram of an electronic device 100 according to an embodiment of this application.

The electronic device 100 may include a TOF module 10 and a processing chip 30. The TOF module 10 is electrically connected to the processing chip 30. The TOF module 10 may include a TOF sensor 11, a driver chip 12, and a light source 13. The TOF sensor 11 may include four SPI signal lines and four LVDS signal lines. The four SPI signal lines of the TOF sensor 11 may be a CSN1 signal line, an SCLK1 signal line, an MOSI1 signal line, and an MISO1 signal line. The four LVDS signal lines of the TOF sensor 11 may be an LDDP1 signal line, an LDDN1 signal line, an LDD-GATE1 signal line, and an LDD-XCLK1 signal line. The CSN1 signal line, the SCLK1 signal line, the MOSI1 signal line, and the MISO1 signal line of the TOF sensor 11 may all be electrically connected to the driver chip 12. The LDDP1 signal line, the LDDN1 signal line, the LDD-GATE1 signal line, and the LDD-XCLK1 signal line of the TOF sensor 11 may all be electrically connected to the driver chip 12. Optionally, the processing chip 30 may be a system-on-chip (System on Chip, SOC), or an application processor (application processor, AP) in the electronic device 100. The processing chip 30 includes a general purpose input/output (General Purpose Input Output, GPIO) port GPIO1. The driver chip 12 includes a signal processing circuit 122. The general purpose input/output port GPIO1 of the processing chip 30 is electrically connected to the signal processing circuit 122.

The processing chip 30 may send a GPIO signal to the signal processing circuit 122 through the general purpose input/output port GPIO1. The signal processing circuit 122 may receive the GPIO signal, and convert the GPIO signal output by the processing chip 30 into a drive signal, so that the driver chip 12 can drive the light source 13 to emit infrared light at a predetermined frequency.

In an application scenario, when a user uses a TOF function of the electronic device 100, the TOF sensor 11 communicates with the driver chip 12 through an SPI signal line, sends an LVDS signal to the driver chip 12, and further controls, by using the driver chip 12, the light source 13 to emit infrared light to a to-be-shot object.

In another application scenario, when the user uses a remote control function of the electronic device 100, the processing chip 30 starts working. The processing chip 30 sends a GPIO signal to the signal processing circuit 122 through the general purpose input/output port GPIO1. The signal processing circuit 122 receives the GPIO signal and converts the GPIO signal into a drive signal, to drive the light source 13 to transmit an infrared remote control signal to a controlled electronic device 200 at a predetermined frequency. After receiving the infrared remote control signal transmitted by the light source 13, and decoding a working instruction included in the infrared light, the controlled electronic device 200 executes a remote control response operation corresponding to the working instruction. This implements the remote control function of the electronic device 100.

The electronic device 100 in this embodiment is used, so that no additional circuit module needs to be added, and the infrared remote control function is implemented on the electronic device by using the TOF module. The TOF sensor 11 does not need to provide an LVDS signal, and the processing chip 30 of the electronic device 100 sends the GPIO signal to the driver chip 12, so that the light source 13 can also be driven to transmit an infrared remote control signal to the controlled electronic device at a predetermined frequency. This implements the infrared remote control function.

It may be understood that, in an optional implementation, the electronic device in this application may further perform remote control on the controlled electronic device with reference to a voice instruction of the user. Specifically, in response to the voice instruction or a tap instruction of the user, the processing chip 30 may further output a corresponding GPIO signal to the signal processing circuit 122 of the driver chip 12, and the signal processing circuit 122 converts the GPIO signal into a drive signal, to drive the light source 13 to emit infrared light. In other words, the electronic device 100 in this application can perform infrared remote control on the controlled electronic device 200 with reference to a voice instruction of the user, making household appliance control more intelligent and convenient. The application scenario shown in FIG. 3 is used as an example. In response to a first voice instruction (for example, the voice instruction may be "Hello YOYO, set the air conditioner temperature in the living room to 26°C"), the processing chip 30 may output a first GPIO signal to the signal processing circuit 122 of the driver chip 12. The signal processing circuit 122 converts the first GPIO signal into a first drive signal, to drive the light source 13 to emit infrared light to perform infrared remote control to adjust the air conditioner to 26°C. Based on this design, the electronic device 100 in this application may further perform remote control on the controlled electronic device with reference to a voice instruction of the user, improving user experience.

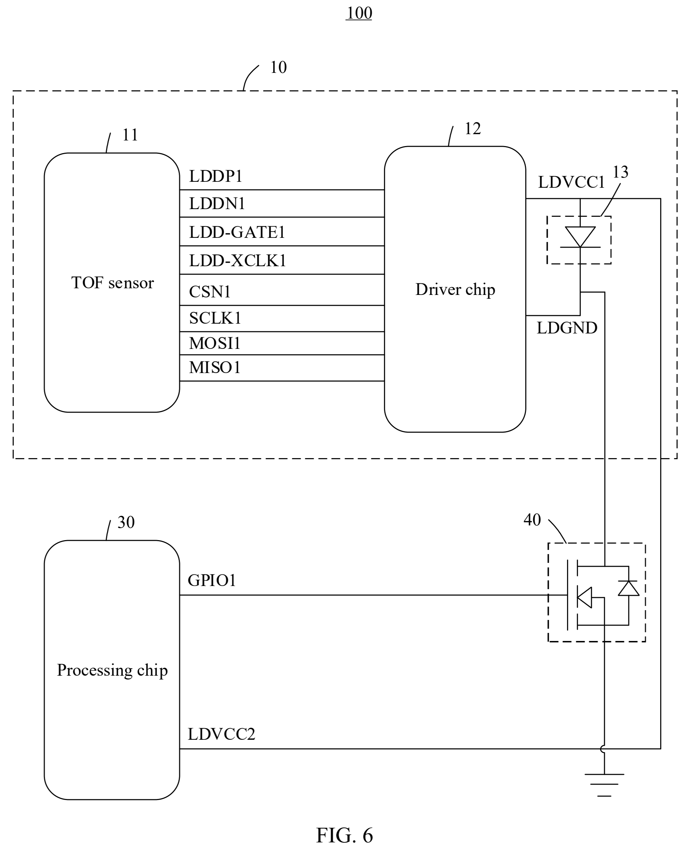

FIG. 6 is a diagram of an electronic device 100 according to another embodiment of this application.

A difference from the electronic device 100 shown in the embodiment in FIG. 5 lies in that an electronic device 100 in the embodiment shown in FIG. 6 may further include a first component 40.

A processing chip 30 is connected to a first end of a light source 13, the first component 40 is connected between a second end of the light source 13 and a ground end, and the processing chip 30 is connected to the first component 40. The first component 40 is configured to connect or disconnect an electrical connection between the processing chip 30 and the light source 13. In an optional implementation, the processing chip 30 includes a general purpose input/output port GPIO1 and a power pin LDVCC2. The general purpose input/output port GPIO1 of the processing chip 30 is electrically connected to a first end of the first component 40, a second end of the first component 40 is grounded, and a third end of the first component 40 is electrically connected to the second end of the light source 13 and a ground pin LDGND of a driver chip 12. The power pin LDVCC2 of the processing chip 30 is electrically connected to the first end of the light source 13 and the power pin LDVCC1 of the driver chip 12. It may be understood that, in this embodiment, the first end of the first component 40 may be used as a control end of the first component 40. In other words, the general purpose input/output port GPIO1 of the processing chip 30 may output a control signal to the first end of the first component 40, to control a status of the first component 40. For example, the control signal output by the general purpose input/output port GPIO1 of the processing chip 30 may be used to control the first component 40 to be in an on state or an off state.

It may be understood that the first component 40 may be any one of the following: a metal-oxide-semiconductor field-effect transistor (Metal-Oxide-Semiconductor Field-Effect Transistor, MOSFET), an insulated gate bipolar transistor (Insulated Gate Bipolar Transistor, IGBT), a thyristor, a bipolar power transistor (bipolar power transistor), or a wideband gap semiconductor field-effect transistor. That is, the first component 40 can implement a function of connecting and disconnecting the electrical connection between the processing chip 30 and the light source 13. This is not specifically limited in this application.

In this embodiment, the processing chip 30 may output a power supply voltage to the light source 13 through the power pin LDVCC2.

An infrared remote control function of the electronic device 100 in this embodiment may not be implemented through a TOF sensor 11 and the driver chip 12, but may be implemented through the processing chip 30 and the first component 40.

When a user uses a TOF function of the electronic device 100, the general purpose input/output port GPIO1 of the processing chip 30 does not output a control signal to the first end of the first component 40. That is, in this case, the first component 40 is in an off state, and the TOF sensor 11 and the driver chip 12 start working. The TOF sensor 11 outputs an LVDS signal to the driver chip 12. After receiving the LVDS signal of the TOF sensor 11, the driver chip 12 drives the light source 13 to emit infrared light to a to-be-shot object. In this way, the TOF sensor 11 can calculate a time difference or a phase difference between emission and reflection of the light, to convert a distance of the to-be-shot object to generate depth information. This implements functions of 3D imaging and face unlock of the electronic device 100.

When the user uses the remote control function of the electronic device 100, the TOF sensor 11 and the driver chip 12 do not work, the processing chip 30 starts working, and the processing chip 30 supplies a power supply voltage to the light source 13. Specifically, in a first time period T1 of a switching cycle T, the general purpose input/output port GPIO1 of the processing chip 30 outputs a first control signal to the first component 40, to control the first component 40 to be turned on and the second end of the light source 13 to be grounded. The processing chip 30 outputs a power supply voltage to the first end of the light source 13, so that the light source 13 transmits an infrared remote control signal to a controlled electronic device 200 in the first time period T1. In a second time period T2 of the switching cycle, the general purpose input/output port GPIO1 of the processing chip 30 does not output a control signal to the first end of the first component 40, so that the first component 40 is turned off. Further, the light source 13 does not emit infrared light to the controlled electronic device 200 in the second time period T2. The first time period T1 and the second time period T2 are one switching cycle T.

For example, the switching cycle of the first component 40 is 1 µs, the processing chip 30 controls the first component 40 to be turned on in a time period of 0 µs to 0.3 µs, and the processing chip 30 outputs a 5 V voltage to the light source 13 through the power pin LDVCC2, so that the light source 13 transmits an infrared remote control signal to the controlled electronic device 200 in this time period. The processing chip 30 controls the first component 40 to be turned off in a time period of 0.3 µs to 1 µs, so that the light source 13 does not transmit an infrared light remote control signal to the controlled electronic device 200 in the time period. In other words, the processing chip 30 may control the first component 40 to be turned on or off in a plurality of switching cycles, so that the light source 13 may send an infrared remote control signal at a first frequency to the controlled electronic device 200, and after receiving the infrared remote control signal transmitted by the light source 13 and decoding a working instruction included in the infrared remote control signal, the controlled electronic device 200 executes a remote control response operation corresponding to the working instruction. This implements a first remote control function of the electronic device 100 on the controlled electronic device 200.

The processing chip 30 controls the first component 40 to be turned on in a time period of 0 µs to 0.4 µs, and the processing chip 30 outputs a 5 V voltage to the light source 13 through the power pin LDVCC2, so that the light source 13 transmits an infrared remote control signal to the controlled electronic device 200 in this time period. The processing chip 30 controls the first component 40 to be turned off in a time period of 0.4 µs to 1 µs, so that the light source 13 does not transmit an infrared remote control signal to the controlled electronic device 200 in the time period. In other words, the processing chip 30 may control the first component 40 to be turned on or off in a plurality of switching cycles, so that the light source 13 may send an infrared remote control signal at a second frequency to the controlled electronic device 200. This implements a second remote control function of the electronic device 100 on the controlled electronic device 200.

It may be understood that, the processing chip 30 may adjust turn-on time of the first component 40 in each switching cycle based on different remote control functions of the controlled electronic device 200, to adjust a frequency at which the light source 13 sends infrared light to the controlled electronic device 200.

Based on the embodiment shown in FIG. 6, when the user uses the remote control function of the electronic device 100, the first component 40 is controlled by using the processing chip 30, so that the processing chip 30 supplies power to the light source 13. This implements the remote control function of the electronic device.

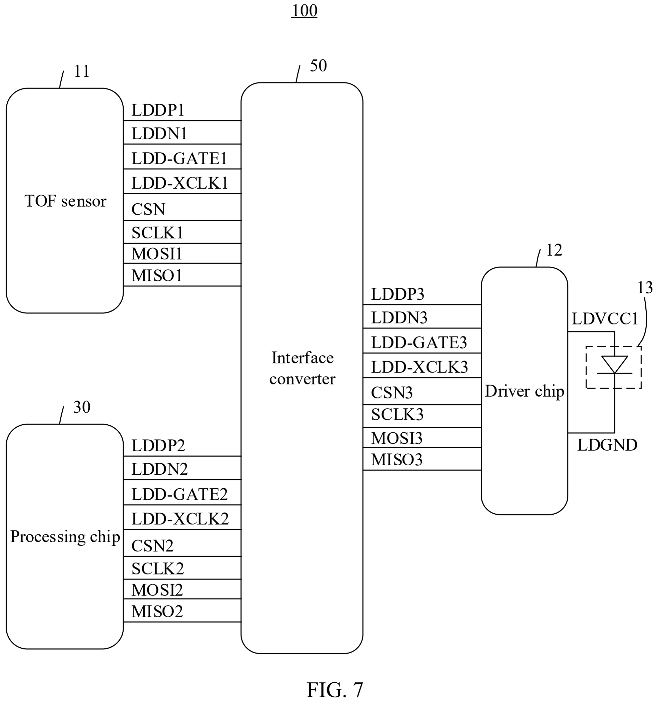

FIG. 7 is a diagram of an electronic device 100 according to another embodiment of this application.

A difference from the electronic device 100 shown in the embodiment in FIG. 5 lies in that an electronic device 100 in the embodiment shown in FIG. 7 may further include an interface converter 50.

A processing chip 30 may be connected to the interface converter 50 through an SPI bus and an LVDS bus, and a TOF sensor 11 may be connected to the interface converter 50 through an SPI bus and an LVDS bus. The interface converter 50 may be connected to a driver chip 12 through an SPI bus and an LVDS bus.

The TOF sensor 11 may include four SPI signal lines and four LVDS signal lines. The four SPI signal lines of the TOF sensor 11 may be a CSN1 signal line, an SCLK1 signal line, an MOSI1 signal line, and an MISO1 signal line. The four LVDS signal lines of the TOF sensor 11 may be an LDDP1 signal line, an LDDN1 signal line, an LDD-GATE1 signal line, and an LDD-XCLK1 signal line. The CSN1 signal line, the SCLK1 signal line, the MOSI1 signal line, and the MISO1 signal line of the TOF sensor 11 may all be electrically connected to the interface converter 50. The LDDP1 signal line, the LDDN1 signal line, the LDD-GATE1 signal line, and the LDD-XCLK1 signal line of the TOF sensor 11 may all be electrically connected to the interface converter 50.

The processing chip 30 may include four SPI signal lines and four LVDS signal lines. The four SPI signal lines of the processing chip 30 may be a CSN2 signal line, an SCLK2 signal line, an MOSI2 signal line, and an MISO2 signal line. The four LVDS signal lines of the processing chip 30 may be an LDDP2 signal line, an LDDN2 signal line, an LDD-GATE2 signal line, and an LDD-XCLK2 signal line. The CSN2 signal line, the SCLK2 signal line, the MOSI2 signal line, and the MISO2 signal line of the processing chip 30 may all be electrically connected to the interface converter 50. The LDDP2 signal line, the LDDN2 signal line, the LDD-GATE2 signal line, and the LDD-XCLK2 signal line of the processing chip 30 may all be electrically connected to the interface converter 50.

The interface converter 50 may include four SPI signal lines and four LVDS signal lines. The four SPI signal lines of the interface converter 50 may be a CSN3 signal line, an SCLK3 signal line, an MOSI3 signal line, and an MISO3 signal line. The four LVDS signal lines of the interface converter 50 may be an LDDP3 signal line, an LDDN3 signal line, an LDD-GATE3 signal line, and an LDD-XCLK3 signal line. The CSN3 signal line, the SCLK3 signal line, the MOSI3 signal line, and the MISO3 signal line of the interface converter 50 may all be electrically connected to the driver chip 12. The LDDP3 signal line, the LDDN3 signal line, the LDD-GATE3 signal line, and the LDD-XCLK3 signal line of the interface converter 50 may all be electrically connected to the driver chip 12.

When a user uses a TOF function of the electronic device 100, the processing chip 30 outputs a control instruction to the interface converter 50, and the interface converter 50 connects a connection between the TOF sensor 11 and the driver chip 12. In other words, the TOF sensor 11 is communicatively connected to the driver chip 12 through the interface converter 50. The TOF sensor 11 may output an LVDS differential signal to the driver chip 12. After receiving the LVDS differential signal of the TOF sensor 11, the driver chip 12 drives a light source 13 to emit infrared light to a to-be-shot object. This implements a TOF camera function of the electronic device 100.

When the user uses a remote control function of the electronic device 100, the processing chip 30 outputs a control instruction to the interface converter 50, and the interface converter 50 connects a connection between the processing chip 30 and the driver chip 12. In other words, the processing chip 30 is communicatively connected to the driver chip 12 through the interface converter 11. The processing chip 30 may output an LVDS differential signal to the driver chip 12 through the interface converter 50. After receiving the LVDS differential signal of the processing chip 30, the driver chip 12 controls the light source 13 to send an infrared remote control signal to a controlled electronic device 200 at a predetermined frequency. This implements the infrared remote control function of the electronic device 100.

Based on the embodiment shown in FIG. 7, when the user uses the TOF function or the remote control function of the electronic device 100, the electronic device 100 may switch between the TOF function and the remote control function by controlling the interface converter 50.

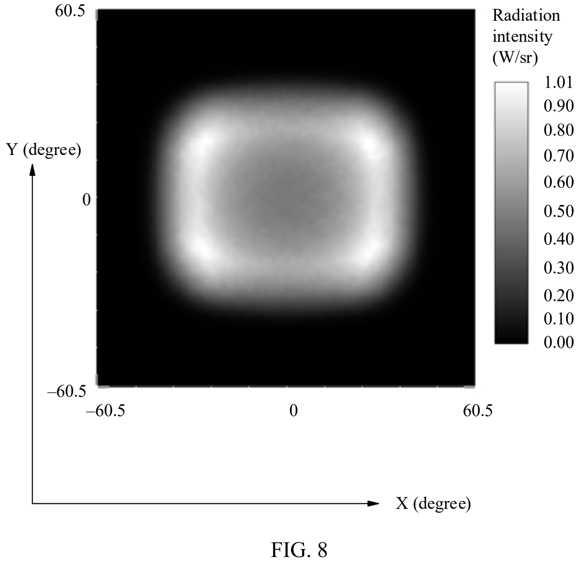

The following uses the electronic device 100 in the embodiment shown in FIG. 5 as an example for description. In response to a user using a remote control function of the electronic device 100, a processing chip 30 sends a GPIO signal to a signal processing circuit 122 in a driver chip 12, and the signal processing circuit 122 converts the GPIO signal into a drive signal, to enable the driver chip 12 to drive a light source 13 to emit infrared light, thereby generating radiation intensity of an infrared light field shown in FIG. 8, where units of an X coordinate and a Y coordinate are both degree (degree), and a unit of the radiation intensity is W/sr.

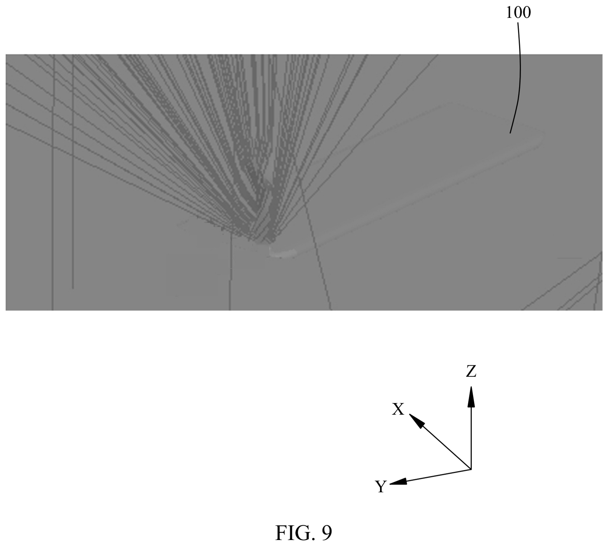

FIG. 9 is a diagram of infrared light emitted by the electronic device 100 in the embodiment shown in FIG. 5. For example, the electronic device 100 is a mobile phone. The mobile phone is placed flat on a table, and a screen of the mobile phone is placed in a direction parallel to an XY plane. As shown in FIG. 9, an optical axis of an infrared light field emitted by a TOF module of the mobile phone is in a Z-axis direction.

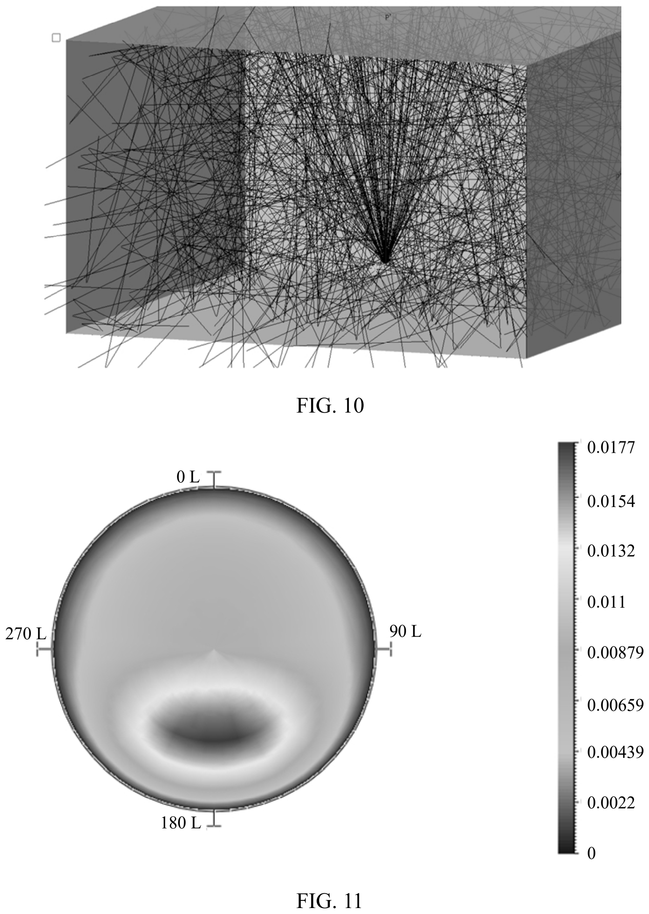

As shown in FIG. 10, the electronic device 100 in the embodiment shown in FIG. 5 is used as an example. The electronic device 100 is located in a room, and a screen of the electronic device 100 may be placed on a table in the direction parallel to the XY plane. The room has walls and a ceiling. In the electronic device 100 in this application, the TOF module is configured to implement infrared remote control. The TOF module is configured to: perform facial recognition or detect a distance of a target object, that is, the TOF module has a wide-angle and high-power infrared light emission light field. Therefore, this can resolve a problem that an infrared emitter of a conventional electronic device needs to align with a controlled electronic device to implement infrared remote control due to low power and a small remote control emission angle of the electronic device. In addition, in the electronic device 100 in this application, after infrared light emitted by the TOF module is reflected by the walls and the ceiling, an infrared light field with radiation intensity shown in FIG. 11 is generated. This can implement 360-degree omnidirectional remote control of the controlled electronic device.

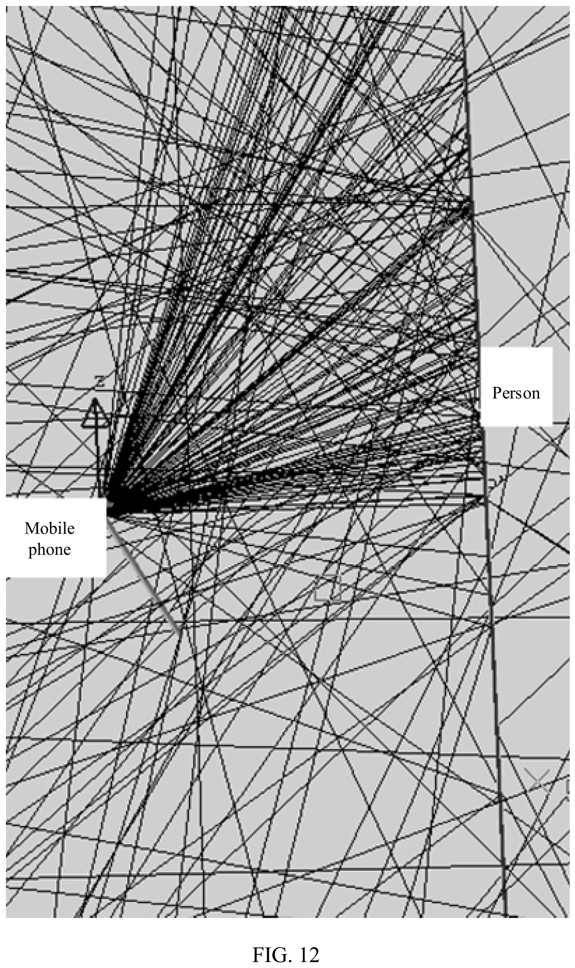

In an application scenario, the electronic device 100 in the embodiment shown in FIG. 5 is used as an example. The electronic device 100 is a mobile phone, and a user holds the mobile phone to perform remote control on a controlled electronic device. FIG. 12 shows a relative position between a light angle of a TOF module 10 of the mobile phone and a person. It can be learned from FIG. 12 that, infrared light emitted by the TOF module 10 of the mobile phone is reflected after illuminating a human body.

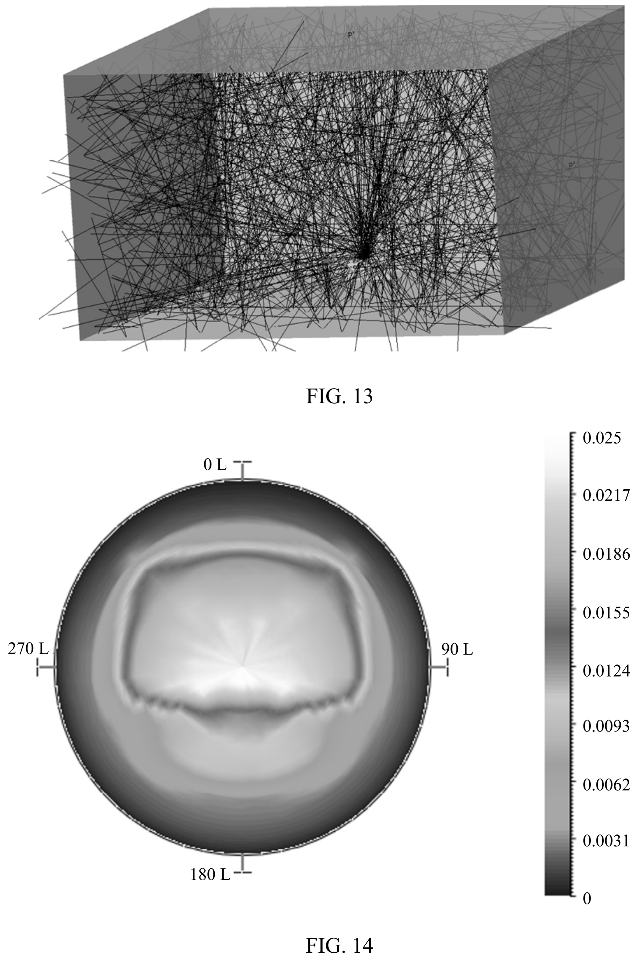

As shown in FIG. 13, for example, an electronic device 100 is a mobile phone, and a user holds the mobile phone and is located in a room. The room has walls, a ceiling, furniture, and the like. In the electronic device 100 in this application, a TOF module is configured to implement infrared remote control, and the TOF module features a wide-angle and high-power infrared light emission light field. Therefore, infrared light emitted by the TOF module of the electronic device 100 in this application covers all directions in the room after being reflected by surrounding objects such as a human body, the walls, the ceiling, or the furniture, generating radiation intensity of an infrared light field shown in FIG. 14. This can implement 360-degree omnidirectional remote control of a controlled electronic device. In other words, the application scenario shown in FIG. 2 is used as an example. The electronic device 100 in this application is used. Even if the user lies on a sofa and plays with the mobile phone, the user does not need to align the electronic device 100 with an infrared receiver of the controlled electronic device, and can implement infrared remote control of the controlled electronic device 200. This greatly improves user experience.

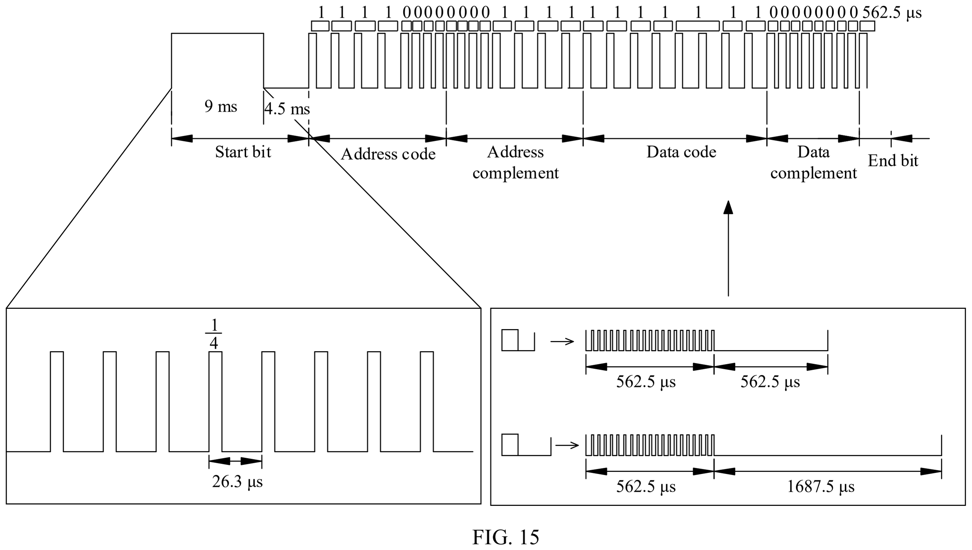

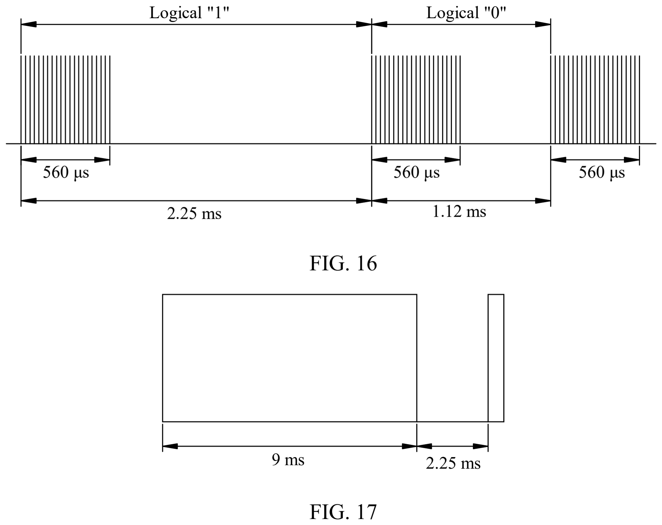

An infrared optical signal sent by the electronic device 100 to the controlled electronic device 200 includes a plurality of data packets. As shown in FIG. 15 and FIG. 16, each data packet may include a start bit, an address code, an address complement, a data code, and a data complement.

As shown in FIG. 16, a bit width of a logic level "1" is 2.25 ms and pulse time is 560 µs, and a bit width of a logic level "0" is 1.12 ms and pulse time is 560 µs. As shown in FIG. 17, a bit width of a repeat code is 11.25 ms, and pulse time is 9 ms. A proportional relationship between a data packet transmit frame rate, transmit peak power, and a remote control distance is shown in Table 1.

**Table 1**

| Transmit peak power | Duty cycle | Data packet transmit frame rate | Remote control distance |
|---|---|---|---|
| XW | 50% | 15 fps | Ym |
| 3X W | 50% | 15 fps | 3 Ym |
| 3X W | 50% | 5 fps | 3 Ym |
| 5X W | 50% | 1 fps | 5 Ym |

It can be learned from Table 1 that, in the electronic device 100 in this application, transmit peak power of a light source 13 may be increased by adjusting a data packet transmit frame rate of an infrared optical signal, to increase an infrared remote control distance between the electronic device 100 and the controlled electronic device 200.

The electronic device in this application is used, so that no additional circuit module needs to be added, and the infrared remote control function can be implemented based on the TOF module of the electronic device. In this application, based on the features of the wide-angle and high-power projected light field of the TOF module, the electronic device 100 in this application can perform 360-degree omnidirectional remote control on the controlled electronic device through reflection of the infrared light from the walls, the ceiling, the furniture, and the human body. The electronic device in this application performs infrared remote control on the controlled electronic device 200 with reference to a voice instruction of the user. The user can implement 360-degree voice remote control without a dead angle, and control the controlled electronic device 200 more intelligently and conveniently only by simply issuing a voice instruction to the electronic device 100. This can be widely applied to various smart home scenarios. In addition, in the electronic device 100 in this application, the transmit peak power may be increased by adjusting the data packet transmit frame rate of the transmitted infrared optical signal, to increase a range of remote control of the electronic device 100 over the controlled electronic device 200. This enhances flexibility and availability of device functions, and improves user experience.

An embodiment of this application further provides an infrared remote control method. The infrared remote control method may be applied to an electronic device 100. The infrared remote control method may include the following steps:

Step S171: At a first moment, control a light source to emit infrared light to a user, control a TOF sensor to collect image data, and perform facial recognition based on the image data.

It may be understood that the electronic device 100 shown in FIG. 5 is used as an example for description. At the first moment, a processing chip 30 controls the light source 13 to emit the infrared light to the user, and the TOF sensor 11 may collect the image data, and perform facial recognition based on the image data. Therefore, the processing chip 30 can determine, based on a facial recognition result, whether the electronic device performs unlock. If unlock succeeds, the user may perform infrared remote control on a controlled electronic device 200 by using the electronic device 100.

Step S172: At a second moment, in response to a tap instruction or a voice instruction of the user, control the light source to emit infrared light to the controlled electronic device at a predetermined frequency, to perform infrared remote control on the controlled electronic device.

At the second moment, the processing chip 30 obtains the tap instruction or the voice instruction of the user, controls the light source 13 to transmit a second infrared optical signal to the controlled electronic device 200, or sends a GPIO signal to a signal processing circuit 122 of a driver chip 12. The signal processing circuit 122 converts the GPIO signal into a drive signal. The drive signal may control the light source 13 to emit the infrared light to the controlled electronic device 200 at the predetermined frequency.

Optionally, the tap instruction is a control instruction generated after the user performs a tap operation on a remote control application on the electronic device 100. The voice instruction may be a voice command issued by the user to the electronic device 100.

After receiving the infrared light emitted by the light source 13, and decoding a working instruction included in the infrared light, the controlled electronic device 200 executes a remote control response operation corresponding to the working instruction.

According to the infrared remote control method and the electronic device in this application, the TOF module is reused to transmit the infrared remote control signal. This improves operational convenience of the electronic device in controlling the controlled electronic device, reduces hardware costs of the electronic device without affecting a layout of another component of the electronic device, and improves user experience.

An embodiment of this application further provides an electronic device. The electronic device provided in this embodiment may be the electronic device 100 shown in FIG. 4, FIG. 5, or FIG. 6. The electronic device may include the processing chip, the TOF module, and a memory. The memory is coupled to the processing chip. The processing chip is configured to run a computer program stored in the memory, to enable the electronic device to implement the infrared remote control method in the foregoing embodiment.

An embodiment of this application further provides a computer-readable storage medium. The computer-readable storage medium stores a computer program. When the computer program runs on an electronic device, the electronic device is enabled to implement the infrared remote control method in the foregoing embodiment.

An embodiment of this application further provides a computer program product. When the computer program product runs on an electronic device, the electronic device is enabled to implement the infrared remote control method in the foregoing embodiment.

The electronic device, the computer-readable storage medium, and the computer program product provided in the embodiments may be configured to perform the corresponding method provided above. Therefore, for beneficial effects that can be achieved, reference may be made to the beneficial effects of the corresponding method provided above. Details are not described herein again.

## Claims

1. An infrared remote control method, applied to an electronic device, wherein the electronic device comprises a TOF module;
the TOF module comprises a TOF sensor, a driver chip, and a light source configured to transmit an infrared optical signal, wherein the driver chip is electrically connected to two ends of the light source; and
the infrared remote control method comprises:
at a first moment, controlling the light source to transmit a first infrared optical signal to a user, controlling the TOF sensor to collect image data, and performing facial recognition based on the image data; and
at a second moment, in response to a tap instruction or a voice instruction of the user, controlling the light source to transmit a second infrared optical signal to a controlled electronic device, or sending a control signal to the driver chip, to enable the driver chip to control the light source to transmit the second infrared optical signal to the controlled electronic device, wherein
the first moment is before the second moment.

2. The infrared remote control method according to claim 1, wherein
the electronic device further comprises a processing chip, the processing chip comprises a GPIO port, the driver chip comprises a signal processing circuit, and the GPIO port of the processing chip is electrically connected to the signal processing circuit;
the processing chip is configured to: at the second moment, in response to the tap instruction or the voice instruction of the user, send a GPIO signal to the signal processing circuit through the GPIO port; and
the signal processing circuit is configured to convert the GPIO signal into a drive signal, wherein the drive signal is used to drive the light source to transmit the second infrared optical signal to the controlled electronic device.

3. The infrared remote control method according to claim 1, wherein
the TOF sensor is configured to: at the first moment, send a control signal to the driver chip; and
the driver chip is configured to convert the control signal into a second drive signal, wherein the second drive signal is used to drive the light source to transmit the first infrared optical signal to the user.

4. The infrared remote control method according to claim 1, wherein
the electronic device further comprises a processing chip and a first component, the first component is connected between a second end of the light source and a grounding end, the processing chip is connected to a first end of the light source, and the processing chip is further connected to the first component; and the first component is configured to connect or disconnect an electrical connection between the processing chip and the light source.

5. The infrared remote control method according to claim 4, wherein
the processing chip is configured to: at the second moment, in response to successful facial recognition of the user, and the tap instruction or the voice instruction, control the first component to be in an on state in a first time period, and control the first component to be in an off state in a second time period, wherein
the first time period and the second time period are one switching cycle.

6. The infrared remote control method according to claim 5, wherein
the processing chip is configured to supply power to the light source when the first component is in an on state.

7. The infrared remote control method according to claim 1, wherein
the electronic device further comprises a processing chip; and
the electronic device further comprises an interface converter, the TOF sensor is connected to a first input end of the interface converter through a first bus and a second bus, the processing chip is connected to a second input end of the interface converter through a third bus and a fourth bus, and an output end of the interface converter is connected to the driver chip through a fifth bus and a sixth bus.

8. The infrared remote control method according to claim 7, wherein
the interface converter is configured to: connect the TOF sensor and the driver chip, or connect the processing chip and the driver chip.

9. The infrared remote control method according to claim 8, wherein
the processing chip is further configured to: in response to the tap instruction or the voice instruction of the user, output a first switching signal to the interface converter, to enable the interface converter to connect the processing chip and the driver chip.

10. The infrared remote control method according to claim 8, wherein
the processing chip is further configured to: in response to a camera instruction of the user, output a second switching signal to the interface converter, to enable the interface converter to connect the TOF sensor and the driver chip.

11. An electronic device, comprising:
a TOF module, and
a processing chip, wherein the processing chip is configured to perform the infrared remote control method according to any one of claims 1 to 10.

12. A computer-readable storage medium, wherein the computer-readable storage medium stores a computer program, and when the computer program runs on an electronic device, the electronic device is enabled to implement the infrared remote control method according to any one of claims 1 to 10.

13. A computer program product, wherein when the computer program product runs on an electronic device, the electronic device is enabled to implement the infrared remote control method according to any one of claims 1 to 10.
